# EUROPEAN PATENT APPLICATION

(11) **EP 2 397 844 A1**
(43) Date of publication of application: **21.12.2011**
(21) Application number: 10166406.8
(22) Date of filing: 17.06.2010
(51) Int. Cl.: G01N 21/77, G01N 33/543, G02B 6/38

(54) **Evanescent field sensor, sensing layer for use in such a sensor and gel for use as such a sensing layer**

(71) Applicant: Optisense B.V., 7521 PA Enschede (NL)
(72) Inventor: Diemeer, Martinus Bernardus Johannes, 1906AD Limmen (NL)
(74) Representative: Hooiveld, Arjen Jan Winfried

(57) **Abstract**

Evanescent field sensor for sensing of chemical and/or physical quantities, comprising a substrate carrying a sensing layer, wherein said sensing layer is a gel, particularly a hydrogel, that is non-adhesive with respect to said substrate.

## Description

The invention relates to an evanescent field sensor for sensing of chemical and/or physical quantities, comprising a substrate carrying a sensing layer.

Evanescent field sensors can be used for sensing of chemical and/or physical quantities. A disadvantage of the known sensor is that applying the sensing layer to the sensor may be an expensive and difficult process.

It is an object of the invention to obviate this disadvantage in the sense that an evanescent field sensor is provided wherein the sensing layer can easily be applied.

In order to accomplish that objective, an evanescent field sensor of the kind referred to in the introduction is characterized in that said sensing layer is a gel, particularly a hydrogel, that is non-adhesive with respect to said substrate

Such a gel has the advantage that it provides enough structure to be handled, while forming itself to the sensor when it is applied thereon, so that a good optical connection between the sensing layer and the core layer is provided. Normally, the sensing layer is adhered to the sensor by bonding, because it is thought that only by adhering the sensing layer to the core the optical connection will be good enough, because no gap may exist between the two layers. Therefore, a person skilled in the art would not use a gel that is non-adhesive with respect to said substrate as a sensing layer, because the person skilled in the art would not believe this would work. However, the current applicant has found that such a gel may be used as the sensing layer, because it forms itself to the sensor, thereby providing the required optical connection. Another advantage of such a gel is that receptors, for example antibodies, can be applied to such a gel.

In a preferred embodiment of the sensor according to the invention said gel comprises a substance chosen from a group comprising agarose, acrylamide, polyacrylamide, polyethyleneglycol, polysaccharide and mixtures thereof.

Agarose, acrylamide, polyacrylamide, polyethyleneglycol, polysaccharide and mixtures thereof have the advantage that they may have a large pore size, up to 200 nm, thus allowing analyte molecules, such as proteins, in particular antibodies, to diffuse through the gel layer in order to reach the sensor surface, while particles that are larger than the pore size cannot diffuse through the gel surface. Also, receptor molecules can be covalently coupled to the substance, which receptor molecules may interact with the analyte molecules to be sensed.

Preferably said gel comprises 0.1 to 10% of said substance, preferably 0.2 to 5%, even more preferably 0.5 to 2%.

In another preferred embodiment of the sensor according to the invention, said gel comprises carboxymethylated, sulfonated and/or sulfated polysaccharides.

An advantage of carboxymethylated, sulfonated and/or sulfated polysaccharides is that this allows the gel to be rehydrated. After applying the gel to the sensor, the gel may dry out, thereby reducing in thickness and pore size, such that it may not function well anymore as the sensing layer. By rehydrating the gel, the original gel structure, in particular the pore size, is reestablished. An additional advantage of carboxymethylated, sulfonated and/or sulfated polysaccharides is the use of well-established protocols for receptor molecule immobilization that are developed for these materials.

Preferably said gel comprises 0.25 to 5% carboxymethylated, sulfonated and/or sulfated polysaccharides, preferably 0.5%.

In yet another preferred embodiment of the sensor, said sensing layer comprises a carrier that is provided on the surface of the sensing layer that is facing away from said substrate.

The carrier has the advantage that the sensing layer can easily be exchanged by holding the carrier without the need to touch the sensing layer itself. Thereby contamination of the sensing layer may be prevented.

Preferably, said carrier is made of a porous material. A porous material has the advantage that said carrier may directly be exposed to analyte molecules, because the analyte molecules will seep through the porous carrier to the sensing layer.

In another embodiment of said sensor said carrier contains micro-fluidic channels adapted for transporting an analyte to the sensing layer. Such micro-fluidic channels have the advantage that said carrier may directly be exposed to analyte molecules, because the analyte molecules will seep through the micro-fluidic channels to the sensing layer.

The invention also relates to a gel, particularly a hydrogel for use as a sensing layer in an evanescent field sensor for sensing of chemical and/or physical quantities, said sensor comprising a substrate carrying a sensing layer, wherein said gel is non-adhesive with respect to said substrate.

The invention also relates to a sensing layer for use in an evanescent field sensor for sensing of chemical and/or physical quantities, said sensor comprising a substrate carrying a sensing layer, wherein said sensing layer is a gel, particularly a hydrogel that is non-adhesive with respect to said substrate, and that said sensing layer comprises a carrier that is provided on the surface of the sensing layer that is facing away from said substrate.

The invention will now be explained in more detail with reference to figures illustrated in a drawing, wherein:
- figures 1A-1C show the steps of sensing with a first embodiment of the sensor according to the invention, wherein the sensing layer is mounted (1A), sensing(1B), and wherein the sensing layer is removed (1C);
- figures 2A-2C show the steps of sensing with a second embodiment of the sensor according to the invention, wherein the sensing layer is mounted (2A), sensing(2B), and wherein the sensing layer is removed (2C); and
- figures 3A-3C show the steps of sensing with a third embodiment of the sensor according to the invention, wherein the sensing layer is mounted (3A), sensing(3B), and wherein the sensing layer is removed (3C).

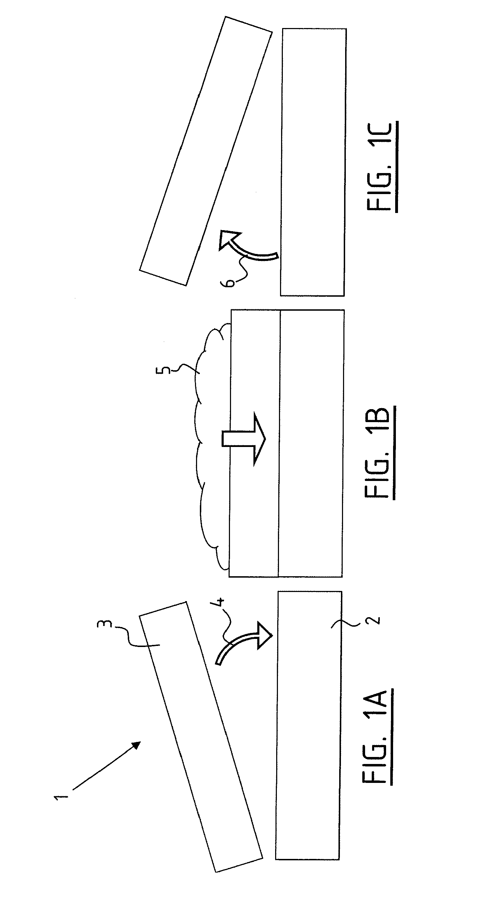

Figure 1 shows an evanescent field sensor 1 for sensing of chemical and/or physical quantities, comprising a substrate 2 carrying a sensing layer 3. The sensing layer 3 is a gel, particularly a hydrogel, that is non-adhesive with respect to said substrate, such that the sensing layer 3 can easily be provided to and/or removed from said substrate 2. The sensing layer 3 comprises a substance chosen from a group comprising agarose, acrylamide, polyacrylamide, polyethyleneglycol, polysaccharide and mixtures thereof. The gel may also comprise carboxymethylated, sulfonated and/or sulfated polysaccharides.

As is shown in figure 1A, the sensing layer 3 is provided to the substrate 2 in the direction of the arrow 4. Figure 1B shows that in use, the sensing layer 3 is exposed to a sample material 5, wherein specific binding of analyte molecules to the sensing layer 3 is probed by the evanescent field of the light travelling through the sensor. This causes a change of the propagation speed of the light, which may be a measure of the amount of analyte molecules binding to the sensing layer 3. In another measurement, the analyte molecules may comprise fluorescent labels, such that when the evanescent field of the light travels through the sensing layer 3 the bonded molecules are excited and will become fluorescent. The fluorescence of the sensing layer 3 may be measured by a CCD camera, such that the fluorescence is a measure for the amount of analyte molecules binding to the sensing layer 3. When the sensing is done, the sensing layer 3 may be disposed in the direction of arrow 6.

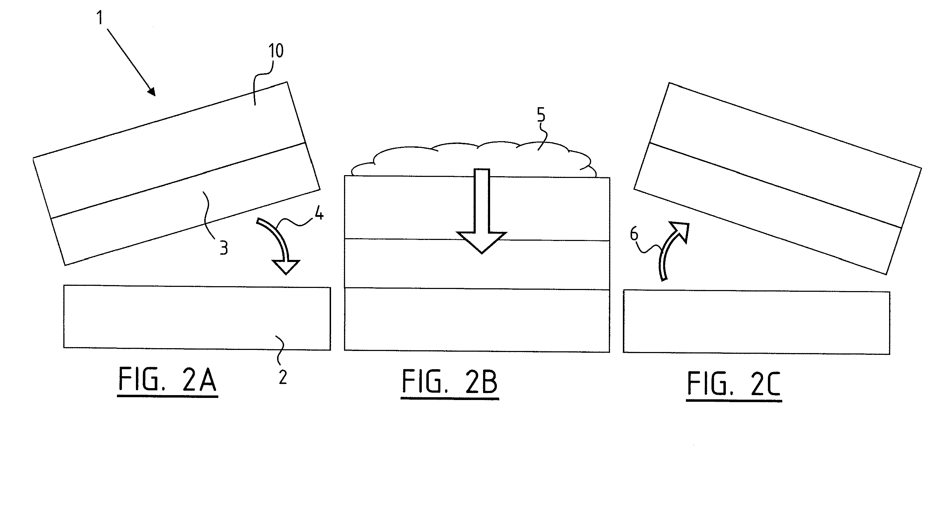

Figures 2 show a second embodiment of the sensor 1 according to the invention, wherein said sensing layer 3 comprises a porous carrier 10 that is provided on the surface of the sensing layer 3 that is facing away from said substrate 2. The sensing layer 3 can easily be provided to said sensor 1 with use of the carrier 10, which carrier 10 can easily be held by a user for displacing the sensing layer 3, thereby not touching the sensing layer 3 such that contamination may be prevented. As is shown in figure 2B, for sensing the sample material 5 is exposed to the carrier 10, such that analyte molecules will seep through the porous carrier 10 to the sensing layer 3. After sensing is done, the separate element may easily be removed with use of the carrier 10.

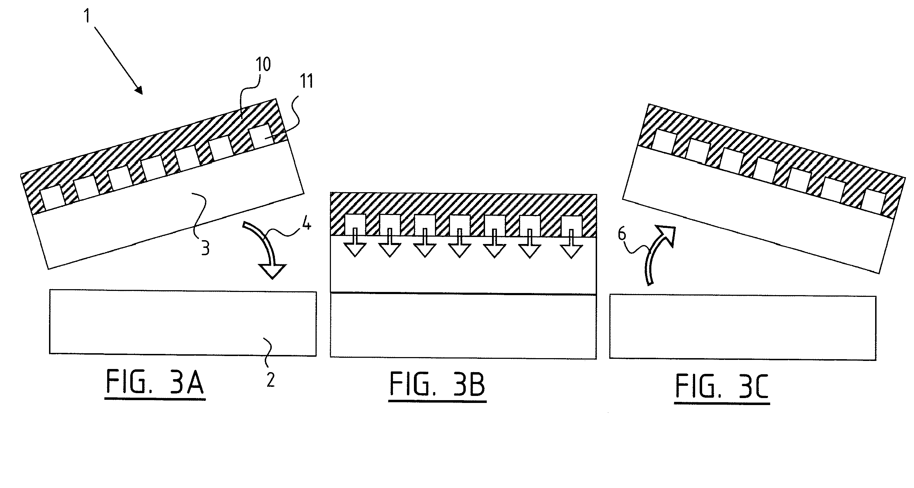

Figure 3 shows a third embodiment of the sensor 1 according to the invention. As is shown, in this embodiment the carrier 10 comprises micro-fluidic channels 11 adapted for transporting the analyte molecules to the sensing layer 3.

Optionally, releasable force means adapted for applying a force on said sensing layer 3 during sensing are present (not shown). The releasable force means for example comprise a mechanical force in the form exerting a pressure on the carrier 10.

The invention is not restricted to the variants shown in the drawing, but it also extends to other preferred embodiments that fall within the scope of the appended claims.

## Claims

1. Evanescent field sensor for sensing of chemical and/or physical quantities, comprising a substrate carrying a sensing layer, **characterized in that** said sensing layer is a gel, particularly a hydrogel, that is non-adhesive with respect to said substrate.

2. Sensor according to claim 1, wherein said gel comprises a substance chosen from a group comprising agarose, acrylamide, polyacrylamide, polyethyleneglycol, polysaccharide and mixtures thereof.

3. Sensor according to claim 2, wherein said gel comprises 0.1 to 10% of said substance, preferably 0.2 to 5%, even more preferably 0.5 to 2%.

4. Sensor according to claim 1, 2 or 3, wherein said gel comprises carboxymethylated, sulfonated and/or sulfated polysacharides.

5. Sensor according to claim 4, wherein said gel comprises 0.25 to 5% carboxymethylated, sulfonated and/or sulfated polysaccharides, preferably 0.5%.

6. Sensor according to any of the preceding claims 1-5, wherein said sensing layer comprises a carrier that is provided on the surface of the sensing layer that is facing away from said substrate.

7. Integrated optical waveguide evanescent sensor according to claim 6, wherein said carrier is made of a porous material.

8. Integrated optical waveguide evanescent sensor according to claim 6, wherein said carrier comprises micro-fluidic channels adapted for transporting an analyte to the gel.

9. Gel, particularly a hydrogel for use as a sensing layer in an evanescent field sensor for sensing of chemical and/or physical quantities according to any of the preceding claims 1-8, said sensor comprising a substrate carrying a sensing layer, **characterized in that** said gel is non-adhesive with respect to said substrate.

10. Sensing layer for use in an evanescent field sensor for sensing of chemical and/or physical quantities according to any of the preceding claims 1-8, said sensor comprising a substrate carrying a sensing layer, **characterized in that** said sensing layer is a gel, particularly a hydrogel that is non-adhesive with respect to said substrate, and that said sensing layer comprises a carrier that is provided on the surface of the sensing layer that is facing away from said substrate.
